Europäisches Patentamt

(19) European Patent Office

Office européen des brevets

(11) Publication number:

**0 096 527**
**B1**

(12) **EUROPEAN PATENT SPECIFICATION**

(45) Date of publication of patent specification: **26.04.89**

(21) Application number: **83303120.6**

(22) Date of filing: **31.05.83**

(51) Int. Cl.⁴: **C 08 F 255/06, C 08 F 285/00**

(54) **A process for producing a rubber-modified thermoplastic resin.**

(30) Priority: **29.05.82 JP 91523/82**

(43) Date of publication of application:
**21.12.83 Bulletin 83/51**

(45) Publication of the grant of the patent:
**26.04.89 Bulletin 89/17**

(84) Designated Contracting States:
**DE FR GB IT NL**

(56) References cited:
**DE-A-1 965 283**
**FR-A-2 319 666**

**CHEMICAL ABSTRACTS, vol. 83, no 24, 15th December 1975, page 45, no. 194329w, Columbus, Ohio, US; & JP - A - 75 88 167 (HITACHI, LTD.) 15-07-1975**

(73) Proprietor: **JAPAN SYNTHETIC RUBBER CO., LTD.**
**11-24, Tsukiji-2-chome Chuo-ku**
**Tokyo 104 (JP)**

(72) Inventor: **Abe, Mitsuo**
**1642-48, Ikuwacho**
**Yokkaichi-shi (JP)**
Inventor: **Nagai, Hisao**
**Shofuryo, 1, Morigayamacho**
**Yokkaichi-shi (JP)**
Inventor: **Kamiya, Akira**
**Tsudanuma-Greenhaitsu 1-109 29, Takinoi-4-chome**
**Funabashi-shi (JP)**

(74) Representative: **Tubby, David George et al**
**MARKS & CLERK 57-60 Lincoln's Inn Fields**
**London WC2A 3LS (GB)**

Courier Press, Leamington Spa, England.

**Description**

The present invention relates to a process for producing a rubber-modified thermoplastic resin having excellent weather resistance, impact resistance and colourability and which produces moulded articles having excellent appearance.

Graft copolymers prepared by graft copolymerizing styrene and acrylonitrile or similar monomers onto ethylene-propylene rubbers, typically an ethylene-propylene-non-conjugated diene copolymer rubber (hereinafter, where appropriate, referred to as "EPDM") are well known, as are rubber-reinforced resin compositions (referred to hereinafter as "AES") obtained by incorporating a copolymer of styrene and acrylontrile or similar copolymer into such a graft copolymer. Both the graft copolymers and the rubber-reinforced resin compositions have excellent weather resistance and impact resistance and are expected to be widely used as moulding materials.

However, such conventional AES resins, although certainly having excellent weather resistance and impact resistance, have the disadvantage that moulded articles produced from them, when observed closely, are found to have a mottled and pearl-like appearance. Moreover, such AES resins have inferior colourability, when compared with diene rubber-based ABS resins belonging to the same class of rubber-reinforced resins. In particular, brightly coloured or raven-black moulded articles produced from them lack brightness and depth of colour.

We have now surprisingly found that a substantial improvement in colourability and appearance of moulded articles can be achieved by producing a rubber-modified thermoplastic resin by graft-copolymerizing a monomer mixture composed of an aromatic alkenyl compound, an alkenyl cyanide, and a methacrylic acid ester onto an ethylene-propylene rubber by a specific method.

It is known to use methacrylic acid esters as one of the monomers to be graft-copolymerized onto diene rubbers or onto ethylene-propylene rubbers, but such compounds adversely affect many properties, including the impact resistance, heat resistance, mechanical strength and thermal stability when moulding. Accordingly, such compounds have tended not to be used in practice, except in very specific fields, such as the production of transparent ABS resins.

By using methacrylic acid esters in a particular way, we have succeeded in improving the appearance of moulded articles and the colourability of AES resins, both of which are common faults in AES resins, without impairing the weather resistance, impact resistance, and heat resistance, which commonly occurs when methacrylic acid esters are used as one of the monomers. In particular, the process of the invention enables brightness and depth to be imparted to brightly coloured or raven-black moulded articles.

The term "raven-black", as used herein, means a black colour which has a high gloss and which gives the appearance of transparency. Thus, physically, a raven-black resin is a resin which causes little diffused reflection both on its surface and inside the resin and which has a low colour value in the Munsell colour system. Hitherto, it has only been possible to obtain a raven-black colour by applying a special coating onto a substrate, such as resin. However, since it is possible to impart a raven-black colour to resins produced by the present invention without the need for any such coating, and since the resin is not only weather resistant but also has excellent colourability, it is anticipated that the field of use of such resins will be considerably expanded.

Accordingly, the present invention provides a process for producing a rubber-modified thermoplastic resin by graft-copolymerizing an aromatic alkenyl compound, an alkenyl cyanide and a methacrylic acid ester onto an ethylene-propylene rubber, characterized in that the graft-copolymerization is carried out to an extent such that the ethylene-propylene rubber is in the range of 5 to 45% by weight of the total, the process being effected

in a first reaction step, in which a monomer mixture consisting of at least one aromatic alkenyl compound, at least one alkenyl cyanide and from 0 to 20% by weight (based on the weight of said monomer mixture) of at least one other copolymerizable monomer, the weight percentage ratio of aromatic alkenyl/alkenyl cyanide being from 80:20 to 40:60, is graft-copolymerized on said ethylene-propylene rubber until the polymerization conversion has reached a value of from 30 to 70% by weight, and

in a second reaction step, in which a methacrylic acid ester or a mixture thereof with up to 20% by weight (based on all monomers added in the second step) of at least one copolymerizable monomer is polymerized in the presence of the reaction mixture obtained in said first reaction step until polymerisation is substantially complete;

the weight ratio of the sum of the aromatic alkenyl compound and the alkenic cyanide to the sum of the methacrylic acid ester used in the first and second reaction steps is from 80:20 to 20:80.

German Specification DE—1965283 discloses a two-step polymerization, but the present process is different from the process disclosed in that German Specification. First, in the German references the monomer composition in the first step is not particularly defined, amd methyl methacrylate is not essential. In the present invention the monomer composition is defined as, using the abbreviations in the present Specification, AN, ST, and MAA, up to 20%. Moreover, the monomer composition in the second step is not particularly defined, and MMA is not essential. In the present invention it is specified that AN and ST together constitute up to 20% of the second step monomer composition, and that MMA constitutes at least 20%. The effect of MMA in the invention described in the German reference is of course not indicated. The effect of MMA in the present invention is to give a vivid colour and otherwise good appearance of the

EP 0 096 527 B1

product. The use of a two-step polymerisation, in the German Specification, is stated to bring about a high impact strength. In the present invention, copolymerising MMA not only gives high impact strength but maintains the heat resistance, mechanical strength, and thermal stability of the material.

The ethylene-propylene rubber used in the process of the invention is preferably an EPDM, more preferably an EPDM in which the molar ratio of ethylene to propylene is in the range from 5:1 to 1:3. Although the Mooney viscosity of the rubber is not critical, we prefer that the rubber employed should have a Mooney viscosity within the range from 20 to 100, more preferably from 25 to 70.

Suitable non-conjugated dienes include alkenyl norbornenes, cyclic dienes and aliphatic dienes, of which 5-ethylidene-2-norbornene and dicyclopentadiene are preferred. The amount of non-conjugated diene used to produce the rubber, expressed in terms of the iodine value of the rubber, is usually within the range from 5 to 40.

The monomer mixture used in the first reaction step of the process of the invention comprises an aromatic alkenyl compound (such as styrene, alpha-methylstyrene, vinyltoluene or a halogenated styrene) and an alkenyl cyanide (such as acrylonitrile or methacrylonitrile). A mixture of styrene and acrylonitrile is most preferred. The weight ratio of aromatic alkenyl compound, preferably styrene, to alkenyl cyanide, preferably acrylonitrile, is within the range from 80:20 to 40:60.

In addition, the monomer mixture used in the first reaction step may, if desired, contain at least one other copolymerizable monomer, preferably a methacrylic acid ester (such as methyl methacrylate) in an amount of 20% by weight or less of the whole of the monomer mixture used in the first reaction step. If the amount of methacrylic acid ester used in the first reaction step exceeds 20% by weight, the impact resistance, heat resistance and other properties of the rubber-modified resin deteriorate and the advantages otherwise offered by the present invention are not achieved.

The principal or only monomer used in the second reaction step is a methacrylic acid ester, preferably one the polymer of which has a glass transition temperature not lower than room temperature, for example methyl methacrylate, ethyl methacrylate, propyl methacrylate or isopropyl methacrylate, of which methyl methacrylate, whose polymers have a high glass transition temperature, is preferred. In addition, it is possible to add other copolymerizable monomers, particularly aromatic alkenyl compounds (such as styrene), alkenyl cyanides (such as acrylonitrile) or mixtures thereof, provided that the total amount of any such additional copolymerizable monomer does not exceed 20% by weight of the whole of the monomers added to the reaction mixture in the second reaction step. If this amount exceeds 20% by weight, the impact resistance, heat resistance and other properties of the rubber-modified resin deteriorate and the advantages otherwise offered by the present invention are not achieved.

Taking into account the monomers used in both the first and the second reaction steps, the overall weight ratio of (a) the sum of the weights of the aromatic alkenyl compound and the alkenyl cyanide to (b) the methacrylic acid ester is within the range from 80:20 to 20:80, more preferably from 70:30 to 30:70.

The rubber content of the rubber-modified thermoplastic resin produced by the process of the present invention may vary over a wide range, depending upon the intended use of the resin. However, in order not to impair the impact resistance of the rubber-modified resin, the rubber component has to be present in an amount of from 5 to 45% by weight, preferably from 10 to 40% by weight.

The graft-copolymerization of the present invention may be carried out using various polymerization techniques, including, for example, bulk polymerization, bulk-suspension polymerization, solution polymerization or emulsion polymerization, and may be performed either as a batch or as a continuous process. However, no matter what polymerization technique is employed, it is essential that the polymerization conversion in the first reaction step should be controlled to within the range from 30 to 70% by weight, preferably from 40 to 60% by weight. If the polymerization conversion in the first step is less than 30% by weight, the product has a reduced heat resistance; on the other hand, if it exceeds 70% by weight, the thermal stability during moulding is adversely affected.

After the graft-copolymerization reaction in the first reaction step has achieved the desired polymerization conversion, monomer for the second reaction step is added and then the copolymerization reaction is continued further until the polymerization reaction is substantially complete.

The optimum polymerization technique for use in the process of the present invention is solution polymerization, using an organic peroxide as a catalyst. The amount of solvent used for such solution polymerization preferably totals from 50 to 200 parts by weight per 100 parts by weight of the sum of the monomer mixture and the rubber. The solvent used for solution polymerization is desirably one which is capable of dissolving the chosen EPDM uniformly. Suitable such solvents include aromatic hydrocarbons and halogenated aromatic hydrocarbons, particularly benzene, toluene, ethylbenzene or chlorobenzene. It is possible to use any conventional radical catalyst as the polymerization catalyst in the process of the present invention, particularly an organic peroxide, such as a ketone peroxide, a dialkyl peroxide, a diacyl peroxide, a peroxy ester or a hydroperoxide.

The polymerization reaction in the process of the present invention is preferably carried out at a temperature within the range from 50 to 150°C.

The advantages of the present invention can also be obtained by the so-called "graft-blending method", in which a graft-copolymer obtained by the process of the present invention is blended with a separately prepared polymer or copolymer of at least one of the monomers mentioned above. Examples of preferred polymers or copolymers which can be blended with the resin produced by the process of the

3

present invention include polystyrene, polymethyl methacrylate, methyl methacrylate-styrene copolymers and styrene-acrylonitrile copolymers, of which methyl methacrylate polymers are preferred, in that they can provide a particularly good raven-black colour and, for this purpose, polymethyl methacrylate is especially preferred.

The invention is further illustrated by the following examples.

Example 1

The following materials were fed into a 10 litre stainless steel reactor equipped with a paddle agitator (parts are by weight):

| JSR EP 65—X | 20 parts |
| Styrene (ST) | 32 parts |
| Acrylonitrile (AN) | 13 parts |
| Toluene | 100 parts |

JSR EP 65—X is an ethylene-propylene-non-conjugated diene rubber, in which ethylidenenorbornene is used as the non-conjugated diene and which has iodine value of 29 and a Mooney viscosity $[ML_{1+4}(100°C)]$ of 74.

The mixture was agitated at 50°C until the rubber had completely dissolved. 0.1 part by weight of t-dodecylmercaptan and 0.2 part by weight of dicumyl peroxide were then added and the resulting mixture was allowed to polymerize at 100°C for 3 hours, until the polymerization conversion had reached 55% by weight. At this point, 35 parts by weight of methyl methacrylate (MMA) were added and the mixture was subjected to further polymerization at 100°C for 5 hours, until a polymerization conversion of 95% by weight had been attained, i.e. the polymerization was regarded as being substantially complete.

This reaction mixture was dissolvated by conventional means and dried, after which 0.2 part by weight of 2,2'-methylenebis-(4-ethyl-6-t-butylphenol) was added. The mixture was then pelletized at 200°C using a 40 mm extruder and the pellets thus obtained were shaped at 230°C into test pieces by means of a 50—Z injection machine, and their physical properties were measured.

The following blend was also prepared using this resin and passed through the aforementioned extruder to form coloured pellets, which were then injection-moulded into plates to evaluate the colour tone (parts are by weight):

| Resin | 100 parts |
| Red iron oxide | 1.0 part |
| Calcium stearate (Red recipe) | 0.5 part |

The results obtained are shown in Table 2.

Examples 2 and 3

The procedure described in Example 1 was repeated, except that the amounts of styrene and acrylonitrile used in the first reaction step and the amount of methyl methacrylate used in the second reaction step were altered. The details and results are summarized in Table 2.

Comparative Example 1

The procedure described in Example 1 was repeated, except that styrene and acrylonitrile only were used as monomers and that the polymerization was completed in the first reaction step. Details and results are summarized in Table 2.

Comparative Example 2

The procedure described in Example 1 was repeated, except that a mixture of styrene, acrylonitrile and methyl methacrylate was used as the monomer mixture in the first reaction step, and polymerization was completed in the first reaction step only. Details and results are summarized in Table 2.

Comparative Examples 3 and 4

The procedure described in Example 1 was repeated except that the polymerization conversion in the first reaction step was changed by varying the polymerization time. Details and results are summarized in Table 2.

4

## Example 4

The procedure described in Example 1 was repeated, except that some methyl methacrylate was used, together with the styrene and acrylonitrile, in the monomer mixture of the first reaction step. Details and results are summarized in Table 2.

## Example 5

The procedure described in Example 1 was repeated, except that some styrene and acrylonitrile were used, together with methyl methacrylate, as the monomer mixture in the second reaction step. Details and results are summarized in Table 2.

## Example 6

The procedure described in Example 1 was repeated, except that JSR EP 85—X was used as the EPDM. This is an ethylene-propylene-non-conjugated diene rubber, in which the non-conjugated diene is dicyclopentadiene and which has an iodine value of 12 and a Mooney viscosity $[ML^1_{+4}(100°C)]$ of 44. Details and results are summarized in Table 2.

## Example 7

The following materials were fed into a 10 litre stainless steel reactor equipped with a paddle agitator (parts are by weight);

| | |
|---|---|
| JSR EP 65—X | 40 parts |
| Styrene | 15 parts |
| Acrylonitrile | 5 parts |
| Toluene | 200 parts |

The mixture was then agitated at 50°C until the rubber had completely dissolved. 0.4 part by weight of dicumyl peroxide was then added to the mixture, which was allowed to polymerize at 100°C for 3 hours, until the polymerization conversion had reached 35% by weight.

40 parts by weight of methyl methacrylate were then added to the resulting reaction mixture and the mixture was further polymerized at 100°C for 5 hours, until the polymerization conversion had reached 90% by weight, at which point the polymerization was regarded as being substantially complete.

The resulting reaction product was desolvated by conventional means and dried, after which 0.4 part by weight of 2,2'-methylenebis-(4-ethyl-6-t-butylphenol) was added, and the resulting mixture was pelletized at 200°C by means of a 40 mm extruder.

The pellets of the graft-copolymer thus obtained were blended with an acrylonitrile-styrene copolymer resin (LITAC—A 120—PC, produced by MITSUI-TOATSU) in a weight ratio of 50:50, and the blend was also pelletized by means of a 40 mm extruder and then shaped into test pieces by means of a 50—Z injection machine. The physical properties of the test pieces were measured and the results obtained are shown in Table 2.

## Example 8

A continuous solution-polymerization process was carried out under the conditions shown in Table 1, using a reaction apparatus in which 3 sets of polymerizers were connected by an overflow system. Each polymerizer had an internal capacity of 30 litres and was provided with a ribbon blade. The amounts of reagents are shown in terms of parts by weight in Table 2.

The polymerization reaction was conducted continuously for 60 hours, at the end of which time the reaction mixture was recovered as in Example 1 and evaluated. The results obtained are shown in Table 2, together with a summary of the reaction conditions. The "polymerization time" shown in Table 2 is an approximate value of the estimated average retention time on the assumption that the liquid specific gravity was 0.87 g/ml.

5

Table 1

| | Feed rate (g/hr) | Polymerization temperature (°C) | Agitator speed (rpm) | Polymerization conversion (wt%) |
|---|---|---|---|---|
| First polymerizer | | 100 | 60 | 60 |
| EP 65-X | 1055 | | | |
| Styrene | 1687 | | | |
| Acrylonitrile | 685 | These were fed in the form of a | | |
| Toluene | 5273 | homogeneous solution at 50°C. | | |
| t-dodecylmercaptan | 5.3 | | | |
| Dicumyl peroxide | 10.5 | | | |
| Second polymerizer | | 100 | 60 | 60 |
| Methyl methacrylate | 1845 | | | |
| Third polymerizer | – | 100 | 60 | 90 |

EP 0 096 527 B1

### Example 9

The procedure described in Example 1 was repeated, except that the amounts of styrene and acrylonitrile employed in the first reaction step were varied. Details and results are summarised in Table 2.

### Example 10

The procedure described in Example 1 was repeated, except that alpha methylstyrene (α-MeST) was used in place of styrene in the first reaction step. Details and results are summarized in Table 2.

### Examples 11 and 12

The procedure described in Example 1 was repeated, except that the amounts of styrene and acrylonitrile employed in the first reaction step were varied. Details and results are shown in Table 2.

7

Table 2

| | Composition of charge and polymerization conversion | | | | | |
|---|---|---|---|---|---|---|
| | First reaction step | | | | | |
| | EPDM | | ST | AN | MMA | |
| | Type | Amount (part by wt.) | (part by wt.) | (part by wt.) | (part by wt.) | |
| EXAMPLE 1 | EP65X | 20 | 32 | 13 | – | |
| " 2 | EP65X | 20 | 42 | 18 | – | |
| " 3 | EP65X | 20 | 15 | 5 | – | |
| " 4 | EP65X | 20 | 32 | 13 | 10 | |
| " 5 | EP65X | 20 | 27 | 10 | – | |
| " 6 | EP85X | 20 | 32 | 13 | – | |
| " 7 | EP65X | 40 | 15 | 5 | – | |
| " 8 | EP65X | 20 | 32 | 13 | – | |
| " 9 | EP65X | 20 | 25 | 20 | – | |
| " 10 | EP65X | 20 | 32 | 13 | – | |
| " 11 | EP65X | 20 | 38 | 7 | – | |
| " 12 | EP65X | 20 | 20 | 25 | – | |
| COMPARA-TIVE EXAMPLE 1 | EP65X | 20 | 55 | 25 | – | |
| " 2 | EP65X | 20 | 32 | 13 | 35 | |
| " 3 | EP65X | ·20 | 32 | 13 | – | |
| " 4 | EP65X | 20 | 32 | 13 | | |

– Cont'd –

8

Table 2 (Cont'd)

| Polymerization | | Second reaction step | | | | |
| Time (hr) | Conversion (% by wt.) | ST (part by wt.) | AN (part by wt.) | MMA (part by wt.) | Polymerization | |
| | | | | | Time (hr) | Conversion (% by wt.) |
| --- | --- | --- | --- | --- | --- | --- |
| 3 | 55 | - | - | 35 | 5 | 95 |
| 3 | 70 | - | - | 20 | 5 | 95 |
| 3 | 30 | - | - | 60 | 5 | 85 |
| 3 | 50 | - | - | 25 | 5 | 90 |
| 3 | 45 | 5 | 3 | 35 | 5 | 90 |
| 3 | 55 | - | - | 35 | 5 | 90 |
| 3 | 35 | - | - | 40 | 5 | 90 |
| 3 | 60 | - | - | 35 | 2.5/2.5 | 90 |
| 3 | 60 | - | - | 35 | 5 | 95 |
| 8 | 55 | - | - | 35 | 15 | 95 |
| 5 | 55 | - | - | 35 | 5 | 95 |
| 3 | 60 | - | - | 35 | 5 | 95 |
| 8 | 95 | - | - | - | - | - |
| 8 | 90 | - | - | - | - | - |
| 6 | 75 | - | - | 35 | 2 | 90 |
| 1 | 25 | - | - | 35 | 7 | 90 |

- Cont'd -

Table 2 (Cont'd)

| Fluidity (x10⁻³ ml/sec) | Izod impact strength (Kg·cm/cm) | Heat deformation temperature (°C) | Pearl-like appearance | Vividness of color | Thermal stability |
|---|---|---|---|---|---|
| 14 | 37 | 84 | o | o | o |
| 12 | 40 | 86 | Δ | Δ | o |
| 18 | 30 | 80 | o | o | o |
| 15 | 35 | 82 | o | o | o |
| 15 | 35 | 82 | o | o | o |
| 16 | 35 | 85 | o | o | o |
| 13 | 40 | 87 | o | o | o |
| 15 | 35 | 85 | o | o | o |
| 8 | 42 | 84 | o | o | o |
| 10 | 30 | 95 | o | o | o |
| 8 | 20 | 82 | o | o | o |
| 16 | 40 | 82 | o | Δ | x |
| 10 | 40 | 89 | x | x | o |
| 15 | 35 | 76 | Δ | o | o |
| 10 | 25 | 85 | o | o | x |
| 15 | 35 | 77 | Δ | o | o |

The properties reported in the above Table were measured as follows:

Fluidity
Measured by a KOKA-type flow tester at 200°C and 30 kg/cm² and reported as the efflux rate from a nozzle of diameter 1 mm and length 2 mm.

Izod Impact Strength
Measured according to ASTM D—256—56, cross-section 0.25 × 0.5 inch (0.635 × 1.27 cm), notched.

Heat Deformation Temperature
Measured according to ASTM D—648, 0.5 inch (1.27 cm), 264 psi (18.21 bar) no annealing.

Pearl-Like Appearance
Judged by visual observation of test piece. The results are reported as follows:

O = no pearl-like appearance;
Δ = slightly pearl-like appearance;
× = definite pearl-like appearance.

Vividness of Colour
Chroma of test piece was judged with the naked eye. The results are reported as follows:

O = extremely vivid;
Δ = vivid;
× = observable turbidity.

Thermal Stability
A test piece was formed at 280°C using a 50—Z injection machine and the presence or absence of silver streaks on the test piece (due to thermal decomposition) were observed with the naked eye. The results are reported as follows:

O = no silver streaks;
× = silver streaks observed.

As can be seen from the results of Examples 1—8 given in Table 2, it is possible to produce an AES resin having a good balance of physical properties and from which a moulded article having markedly improved appearance and colourability can be obtained, by graft-copolymerizing a monomer mixture comprising an aromatic alkenyl compound, an alkenyl cyanide and a methacrylic acid ester onto an EPDM in accordance with the present invention.

However, AES resins prepared without using a methacrylic acid ester, typified by that of Comparative Example 1, produced moulded articles having poor appearance and colourability, even though they have a good balance of other physical properties. On the other hand, if a methacrylic acid ester is used but the polymerization reaction is effected in a single step, as in Comparative Example 2, the resulting resin is found to have unacceptably low Izod impact strength and heat deformation temperature, although moulded articles prepared from it have improved appearance and colourability.

Moreover, if the polymerization conversion in the first reaction step is outside the prescribed range, as in Comparative Examples 3 and 4, the products have inferior thermal stability and a poor balance of physical properties.

Example 13

Resin compositions were prepared from the resins or resin mixtures shown in Table 3, using the following recipe (parts are by weight):

| Resin | 100 parts |
|---|---|
| Carbon black | 0.5 part |
| Calcium stearate | 0.3 part |

The colour values of these compositions were measured by a colour difference meter and are indicated in Table 3 by the values on the Munsell colour system; the smaller the value, the better the raven-black colour.

11

Table 3

| Resin / Run No. | Example | | | | | | Comp. Ex. |
|---|---|---|---|---|---|---|---|
| | 1 | 2 | 3 | 4 | 5 | 6 | 7 |
| AES resin parts by wt. | | | | | | | 100 |
| MAES resin " | 100 | 50 | 50 | 50 | 50 | 50 | |
| PMMA resin " | | 50 | | 25 | 25 | | |
| PMS resin " | | | 50 | 25 | | 25 | |
| PAS resin " | | | | | 25 | 25 | |
| Black-blended colour value | 1.3 | 0.7 | 0.9 | 0.7 | 0.9 | 1.0 | 2.0 |

NOTE:

AES resin: graft-copolymer of Comparative Example 1

MAES resin: graft-copolymer of Example 7 (resin of this invention)

PMMA resin: methyl methacrylate polymer (Acrypet M manufactured by MITSUBISHI RAYON)

PMS resin: methyl methacrylate-styrene copolymer (Cevian MAS-30 manufactured by DAICELL CHEMICAL INDUSTRIES)

PAS resin: styrene-acrylonitrile copolymer (Litac-/ 120 PC manufactured by MITSUI-TOATSU)

EP 0 096 527 B1

EP 0 096 527 B1

It can be seen from the above results that the resins of the present invention give a composition having a substantially better raven-black colour than do simple AES resins — compare, for example, Runs 1 and 7. Moreover, compositions in which a resin of the present invention is blended with a methyl methacylate polymer give even better results — see Runs 2 to 6 — whilst blends using methyl methacylate itself, as in Runs 2 and 4, are exceptionally good.

**Claims**

1. A process for producing a rubber-modified thermoplastic resin by graft-copolymerizing an aromatic alkenyl compound, an alkenyl cyanide and a methacrylic acid ester onto an ethylene-propylene rubber, characterized in that the graft-copolymerization is carried out to an extent such that the ethylene-propylene rubber is in the range of 5 to 45% by weight of the total, the process being effected

in a first reaction step, in which a monomer mixture consisting of at least one aromatic alkenyl compound, at least one alkenyl cyanide and from 0 to 20% by weight (based on the weight of said monomer mixture) of at least one other copolymerizable monomer, the weight percentage ratio of aromatic alkenyl/alkenyl cyanide being from 80:20 to 40:60, is graft-copolymerized on said ethylene-propylene rubber until the polymerization conversion has reached a value of from 30 to 70% by weight, and

in a second reaction step, in which a methacrylic acid ester or a mixture thereof with up to 20% by weight (based on all monomers added in the second step) of at least one copolymerizable monomer is polymerized in the presence of the reaction mixture obtained in said first reaction step until polymerisation is substantially complete;

the weight ratio of the sum of the aromatic alkenyl compound and the alkenic cyanide to the sum of the methacrylic acid ester used in the first and second reaction steps is from 80:20 to 20:80.

2. A process according to Claim 1, in which, in said first reaction step, said aromatic alkenyl compound is styrene, alpha-methylstyrene, vinyltoluene or a halogenated styrene, and said alkenyl cyanide is acrylonitrile or methacrylonitrile.

3. A process according to Claim 1, in which the monomer mixture in said first reaction step comprises styrene and acrylonitrile.

4. A process according to Claim 3. in which the weight ratio of styrene to acrylonitrile is from 80:20 to 40:60.

5. A process according to any one of the preceding Claims, in which said other copolymerizable monomer in said first reactive step is a methacrylic acid ester.

6. A process according to any one of the preceding Claims, in which, in said second reaction step, said methacrylic acid ester is such that a polymer thereof has a glass transition point not lower than room temperature.

7. A process according to Claim 6, in which said methacrylic acid ester is at least one of methyl methacrylate, ethyl methacrylate and isopropyl methacrylate.

8. A process according to any one of the preceding Claims, in which, in said second reaction step, said copolymerizable monomer is an aromatic alkenyl compound and/or an alkenyl cyanide.

9. A process according to any of Claims 1 to 8, in which the rubber content is from 10 to 40% by weight.

10. A process according to any one of the preceding Claims, in which the polymerization conversion in said first reaction step is from 40 to 60% by weight.

11. A process according to any one of the preceding Claims, in which the polymerisation is effected in a solvent, employing a radical catalyst and at a temperature of from 50 to 150°C.

12. A process according to Claim 11, in which said solvent is an aromatic hydrocarbon or a halogenated aromatic hydrocarbon, and said catalyst is an organic peroxide.

**Patentansprüche**

1. Verfahren zur Herstellung eines mit Kautschuk modifizierten, thermoplastischen Kunstharzes durch Pfropfcopolymerisation einer aromatischen Alkenylverbindung, eines Alkenylzyanids und eines Methacrylsäureesters auf einen Äthylen-Propylen-Kautschuk, dadurch gekennzeichnet, daß die Pfropfcopolymerisation in einem solchen Ausmaß durchgeführt wird, daß der Äthylen-Propylen-Kautschuk von 5 bis 45 Gew.% der Gesamtmenge beträgt, wobei

in einer ersten Stufe ein Monomerengemisch aus mindestens einer aromatischen Alkenylverbindung, mindestens einem Alkenylzylanid und von 0 bis 20 Gew.%, bezogen auf das Monomerengemisch, mindestens eines anderen copolymerisierbaren Monomers, wobei das Gewichtsverhältnis von aromatischer Alkenylverbindung zu Alkenylzyanid von 80:20 bis 40:60 beträgt, auf den Äthylen-Propylen-Kautschuk pfropfcopolymerisiert wird, bis der Polymerisationsumsatz einen Wert von 30 bis 70 Gew.% erreicht hat und

in einer zweiten Stufe ein Methacrylsäureester oder ein Gemisch dieser Verbindung mit bis zu 20 Gew.%, bezogen auf alle in der zweiten Stufe zugegebenen Monomeren, mindestens eines anderen copolymerisierbaren Monomers in Gegenwart des in der ersten Stufe erhaltenen Reaktionsgemisches polymerisiert wird, bis die Polymerisation im wesentlichen vollständig ist,

das Gewichtsverhältnis der Summe von aromatischer Alkenylverbindung und Alkenylzyanid zur

13

# EP 0 096 527 B1

Summe des in der ersten und in der zweiten Reaktionsstufe verwendeten Methacrylsäureesters von 80:20 bis 20:80 beträgt.

2. Verfahren nach Anspruch 1, in dem in der ersten Reaktionsstufe als aromatische Alkenylverbindung Styrol, α-Methylstyrol, Vinyltoluol oder ein halogeniertes Styrol und als Alkenylzyanid Acrylnitril oder Methacrylnitril verwendet werden.

3. Verfahren nach Anspruch 1, in dem in der ersten Reaktionsstufe als Monomerengemisch ein Gemisch von Styrol und Acrylnitril verwendet wird.

4. Verfahren nach Anspruch 3, in dem ein Gewichtsverhältnis von Styrol zu Acrylnitril von 80:20 bis 40:60 verwendet wird.

5. Verfahren nach einem der vorstehenden Ansprüche, in dem als anderes copolymerisierbares Monomer in der ersten Reaktionsstufe ein Methacrylsäureester verwendet wird.

6. Verfahren nach einem der vorstehenden Ansprüche, in dem in der zweiten Reaktionsstufe ein solcher Methacrylsäureester verwendet wird, daß ein daraus gebildetes Polymer eine Glasübergangstemperatur von nicht unter Raumtemperatur hat.

7. Verfahren nach Anspruch 6, in dem als Methacrylsäureester mindestens ein Methylmethacrylat, Äthylmethacrylate oder Isopropylmethacrylat verwendet wird.

8. Verfahren nach einem der vorstehenden Ansprüche, in dem in der zweiten Reaktionsstufe als copolymerisierbares Monomer eine aromatische Alkenylverbindung und/oder ein Alkenylzyanid verwendet wird.

9. Verfahren nach einem der Ansprüche 1 bis 8, in dem eine Kautschukmenge von 10 bis 40 Gew.% eingesetzt wird.

10. Verfahren nach einem der vorstehenden Ansprüche, in dem die erste Reaktionsstufe bis zu einem Polymerisationsumsatz von 40 bis 60 Gew.% durchgeführt wird.

11. Verfahren nach einem der vorstehenden Ansprüche, in dem die Polymerisation in einem Lösungsmittel unter Verwendung eines Radikalkatalysators und einer Temperatur von 50 bis 150°C durchgeführt wird.

12. Verfahren nach Anspruch 11, in dem als Lösungsmittel ein aromatischer oder ein halogenierter aromatischer Kohlenwasserstoff und als Katalysator ein organisches Peroxid verwendet werden.


## Revendications

1. Procédé pour produire une résine thermoplastique modifiée par du caoutchouc en copolymérisant par greffage un composé alcényl-aromatique, un cyanure d'alcényle et un ester d'acide méthacrylique sur un caoutchouc éthylène-propylène, caractérisé en ce que la copolymérisation par greffage est conduite à un degré tel que le caoutchouc éthylène-propylène constitue 5 à 45% en poids du poids, le procédé étant exécuté

en une première étape de réaction, dans laquelle un mélange de monomères constitué d'au moins un composé alcényl-aromatique, au moins un cyanure d'alcényle et 0 à 20% en poids (par rapport au poids dudit mélange de monomères) d'au moins un autre monomère copolymérisable, le rapport de pourcentages en poids du composé alcényl-aromatique au cyanure d'alcényle étant de 80:20 à 40:60, est copolymérisé par greffage sur ledit caoutchouc éthylène-propyléne jusqu'à ce que le taux de conversion par polymérisation ait atteint une valeur de 30 à 70% en poids, et

en une seconde étape de réaction, dans laquelle un ester d'acide méthacrylique ou un mélange de celui-ci avec jusqu'à 20% en poids (par rapport à tous les monomères ajoutés dans la seconde étape) d'au moins un monomère copolymérisable, est polymérisé en présence du mélange réactionnel obtenu dans ladite première étape de réaction jusqu'à ce que la polymérisation soit sensiblement complète;

le rapport en poids de la somme du composé alcényl-aromatique et du cyanure d'alcényle à la somme de l'ester d'acide méthacrylique, utilisés dans les première et seconde étapes de réaction, est de 80:20 à 20:80.

2. Procédé selon la revendication 1, dans lequel, dans ladite première étape de réaction, ledit composé alcényl-aromatique est le styrène, l'alpha-méthylstyrène, le vinyltoluène ou un styrène halogéné, et ledit cyanure d'alcényle est l'acrylonitrile ou le méthacrylonitrile.

3. Procédé selon la revendication 1, dans lequel le mélange de monomères de ladite première étape de réaction comprend du styrène et de l'acrylonitrile.

4. Procédé selon la revendication 3, dans lequel le rapport en poids du styrène à l'acrylonitrile est de 80:20 à 40:60.

5. Procédé selon l'une quelconque des revendications précédentes, dans lequel ledit autre monomère copolymérisable de ladite première étape de réaction est un ester d'acide méthacrylique.

6. Procédé selon l'une quelconque des revendications précédentes, dans lequel, dans ladite seconde étape de réaction, ledit ester d'acide méthacrylique est tel que la température de transition vitreuse d'un polymère de celui-ci ne soit pas inférieure à la température ambiante.

7. Procédé selon la revendication 6, dans lequel ledit ester d'acide méthacrylique est l'un au moins du méthacrylate de méthyle, du méthacrylate d'éthyle et du méthacrylate d'isopropyle.

8. Procédé selon l'une quelconque des revendications précédentes, dans lequel, dans ladite seconde

14

étape de réaction, ledit monomère copolymérisable est un composé alcényl-aromatique et/ou un cyanure d'alcényle.

9. Procédé selon l'une quelconque des revendications 1 à 8, dans lequel la teneur en caoutchouc est de 10 à 40% en poids.

10. Procédé selon l'une quelconque des revendications précédentes, dans lequel le taux de conversion par polymérisation atteint dans ladite première étape de réaction est de 40 à 60% en poids.

11. Procédé selon l'une quelconque des revendications précédentes, dans lequel la polymérisation est exécutée dans un solvant, en utilisant un catalyseur radicalaire, et à une température de 50 à 150°C.

12. Procédé selon la revendication 11, dans lequel ledit solvant est un hydrocarbure aromatique ou un hydrocarbure aromatique halogéne, et ledit catalyseur est un peroxyde organique.